# EUROPÄISCHE PATENTSCHRIFT

(11) **EP 3 798 165 B1**
(45) Veröffentlichungstag und Bekanntmachung des Hinweises auf die Patenterteilung: **24.05.2023**
(21) Anmeldenummer: 19199111.6
(22) Anmeldetag: 24.09.2019
(51) Int. Cl.: B65H 54/10, B65H 59/38, H01M 10/04, H01F 41/094

(54) **VERFAHREN ZUM WICKELN EINES WICKELGUTES, COMPUTERPROGRAMMPRODUKT, STEUEREINRICHTUNG UND WICKELMASCHINE**
METHOD FOR WINDING OF A COILED ITEM, CONTROL DEVICE, COMPUTER PROGRAM PRODUCT AND COILING MACHINE
PROCÉDÉ D'ENROULEMENT D'UN PRODUIT À ENROULER, PRODUIT PROGRAMME INFORMATIQUE, DISPOSITIF DE COMMANDE ET ENROULEUSE

(43) Veröffentlichungstag der Anmeldung: 31.03.2021
(73) Patentinhaber: Siemens Aktiengesellschaft, 80333 München (DE)
(72) Erfinder: Kerling, Sebastian, 91052 Erlangen (DE); Richter, Thomas, 90587 Obermichelbach (DE); Seelinger, Björn, 91315 Höchstadt (DE); Zimmermann, Roland, 91052 Erlangen (DE)
(74) Vertreter: Siemens Patent Attorneys

(56) Entgegenhaltungen:
- EP-A1- 2 305 393
- EP-A1- 2 485 227
- EP-A1- 3 333 106
- WO-A1-2018/029129
- DE-A1- 19 614 300
- US-A1- 2016 036 086

## Beschreibung

Die vorliegende Erfindung betrifft ein Verfahren sowie ein Computerprogrammprodukt zum Wickeln eines Wickelgutes von einer Versorgungsrolle auf einen Wickelkörper. Ferner betrifft die vorliegende Erfindung eine Steuereinrichtung für eine Wickelmaschine sowie eine solche Wickelmaschine.

Beim Wickeln eines Wickelgutes, insbesondere bei einem Draht oder einer Folie, auf einen Wickelkörper wird auf das Wickelgut regelmäßig eine Wickelspannung beaufschlagt. Die Wickelspannung entspricht hierbei der Kraft (pro Querschnittfläche), mit der das Wickelgut auf den Wickelkörper gewickelt wird. In modernen Vorrichtungen zum Wickeln eines Wickelgutes kann die Wickelspannung eingestellt werden. Mit anderen Worten ist die Wickelspannung die Zugspannung des Wickelgutes.

Die Offenlegungsschrift US 2016/0036086 A1 offenbart ein Verfahren bzw. eine Wickelmaschine gemäß dem Oberbegriff des Anspruchs 1 bzw. 13 und zeigt eine Fertigungsmaschine für einen Akku mit einem Bereitsteller zum Bereitstellen von Ausgangsmaterial, einem Wickler zum Wickeln des Ausgangsmaterial über einen Wickeldorn, und eine Steuerung um die Bereitstellungsmenge zu steuern und eine Umdrehungsanzahl des Dorns, wobei die Steuerung Profile der Bereitstellungsmenge in Bezug auf die Umdrehungsanzahl speichert und Bereitstellungsmenge und Umdrehungsanzahl synchron steuert basierend auf dem Profil.

Die Offenlegungsschrift DE 196 14 300 A1 zeigt ein Verfahren zur selbstregulierenden Kompensation der Auswirkung des ungleichmäßigen Rundlaufs einer Rolle durch Approximation des Zugistwertes mit mindestens einer drehharmonischen Sinusfunktion, deren Argument der Rollendrehwinkel ist, wobei die Sinusapproximation nach der orthogonalen Korrelation oder gemäß der harmonischen Analyse nach Fourier erfolgt und Schätzwerte für die Amplitude und die Phase des durch den ungleichmäßigen Rundlauf bewirkten Sinussignals gebildet werden. Aus diesen Schätzwerten wird ein Zusatzmoment gebildet. Der Momentsollwert für die Rolle wird mit diesem Zusatzmoment beaufschlagt. Neben der drehharmonischen Sinusfunktion erster Ordnung kann mindestens eine weitere drehharmonische Sinusfunktion zweiter oder höherer Ordnung berücksichtigt werden.

Die europäische Patentanmeldung EP 2 305 393 A1 zeigt ein Verfahren zum Regeln eines Haspelantriebs, vorzugsweise für ein Kaltwalzwerk, wobei eine winkelbezogene Information und eine wegstreckenbezogene Information gemessen werden, und ein Haspelschlag mittels der winkelbezogenen Information und der wegstreckenbezogenen Information kompensiert wird.

EP 2 485 227 A1 beschreibt eine Drahtwickelmaschine und eine Regelung für eine solche Drahtwickelmaschine.

In der EP 3 333 106 A1 wird ein Verfahren zum Wickeln eines Wickelgutes von einer Versorgungsrolle auf einen Wickelkörper mit nicht-kreisförmigem Querschnitt beschrieben, bei welchem das Wickelgut von der Versorgungsrolle bereitgestellt wird und auf den Wickelkörper aufgewickelt wird, wobei die Wickelspannung des Wickelgutes auf eine vorgesehene Wickelspannung einstellbar ist, wobei zur Einstellung der Wickelspannung eine Drehgeschwindigkeit des Wickelkörpers gesteuert oder geregelt wird, und/oder die Wickelspannung durch eine Einstelleinheit auf die vorgesehene Wickelspannung eingestellt wird.

Bei solchen Wickelmaschinen können durch Ungenauigkeiten in Montage und/oder Fertigung Störeinflüsse auftreten, die sich negativ auf die Qualität des Produktes auswirken können. Dabei ist nicht zwangsläufig bekannt, von welcher Einrichtung der Wickelmaschine welche Teilkomponente der Störung verursacht wird.

Beispielsweise ist es möglich, dass die Unwucht von zwei verschiedenen Umlenkrollen der Wickelmaschine den Bahnzug negativ beeinflussen. Die resultierende Störung kann zwar gemessen werden, die Zuordnung der Teilkomponenten der Störung und die Vorsteuerung der entsprechenden Teilkomponenten an richtiger Stelle ist bei herkömmlichen Wickelmaschinen bisher nicht möglich. Durch eine Vorsteuerung des Signals an einer falschen Stelle, zum Beispiel nicht an der die Teilkomponente der Störung verursachenden Einrichtung, könnte die Qualität des Produktes sogar verschlechtert werden.

In einer älteren, nicht-veröffentlichten Anmeldung der Anmelderin wird ein Verfahren zum Wickeln eines Wickelgutes von einer Versorgungsrolle auf einen Wickelkörper mit nicht-kreisförmigem Querschnitt einer Wickelmaschine beschrieben, bei welchem das Wickelgut von der Versorgungsrolle bereitgestellt wird und das von der Versorgungsrolle bereitgestellte Wickelgut über zumindest eine Umlenkrolle auf den Wickelkörper aufgewickelt wird, wobei eine Ist-Wickelspannung des Wickelgutes auf eine Soll-Wickelspannung in Abhängigkeit eines in einer Speichereinheit gespeicherten positionsabhängigen Kompensationssignals zur Kompensation einer aufgrund des nicht-kreisförmigen Querschnitts des Wickelgutes veränderlichen freien Länge des Wickelgutes zwischen der Umlenkrolle und dem Wickelkörper eingestellt wird.

Die enthaltenen Frequenzanteile oder Teil-Spektren des Kompensationssignals sind insbesondere abhängig von der Geometrie des Wickelkörpers der geometrischen Anordnung des Aufwicklers zur ersten Umlenkrolle sowie der Prozessgeschwindigkeit. Abhängig vom mechanischen System der Wickelmaschine, insbesondere umfassend die Steifigkeit der Mechanik, die Getriebe, die Riemen und die Kupplung, können nicht alle Frequenzanteile unverfälscht zur Lastseite übertragen werden. Dies kann von geringen negativen Einflüssen auf die Prozessqualität bis hin zu mechanischen Schäden der Wickelmaschine führen.

Vor diesem Hintergrund besteht eine Aufgabe der vorliegenden Erfindung darin, das Wickeln eines Wickelgutes auf einen Wickelkörper zu verbessern.

Gemäß einem ersten Aspekt wird ein Verfahren zum Wickeln eines Wickelgutes mittels einer Wickelmaschine aufweisend eine Anzahl von durch eine Anzahl von Antrieben antreibbaren Wickel-Einrichtungen, welche zumindest eine Versorgungsrolle und einen Wickelkörper umfassen, vorgeschlagen. Das Verfahren umfasst die folgenden Schritte:
Bereitstellen des Wickelgutes von der Versorgungsrolle, und
Aufwickeln des von der Versorgungsrolle bereitgestellten Wickelgutes über zumindest eine Umlenkrolle auf den Wickelkörper, wobei zumindest einer der Antriebe in Abhängigkeit eines eine Störung zumindest teilweise kompensierenden positionsabhängigen Kompensationssignals eingestellt wird, wobei das positionsabhängige Kompensationssignal für den jeweiligen Antrieb durch die folgenden Schritte bereitgestellt wird:
   a) Aufnehmen einer die Störung repräsentierenden Störgröße im Zeitbereich während eines Wickelvorgangs,
   b) Transformieren der aufgenommenen Störgröße von dem Zeitbereich in ein Spektrum im Frequenzbereich,
   c) Filtern des Spektrums mittels eines für die dem Antrieb zugeordnete Wickel-Einrichtung spezifischen Filters,
   d) Transformieren des gefilterten Spektrums von dem Frequenzbereich in den Zeitbereich zur Bereitstellung eines zeitabhängigen Kompensationssignals, und
   e) Transformieren des zeitabhängigen Kompensationssignals in das positionsabhängige Kompensationssignal.

Durch das vorliegende Verfahren kann ein optimiertes positionsabhängiges Kompensationssignal generiert und beim Wickelvorgang verwendet werden. Insbesondere wird für jeden Antrieb der antreibbaren Wickel-Einrichtungen der Wickelmaschine ein spezifisches positionsabhängiges Kompensationssignal generiert und beim Wickelvorgang, insbesondere zur Vorsteuerung des jeweiligen Antriebs verwendet.

Das vorliegende Verfahren ist ohne Kenntnis der Geometrie des Wickelkörpers einsetzbar, da das positionsabhängige Kompensationssignal aus der aufgenommenen Störgröße als solcher ableitbar ist. Somit ist das vorliegende Verfahren flexibel, insbesondere was die Mechanik der Wickelmaschine angeht, da die Störung durch die Anwendung der Schritte a) bis e) eingelernt wird. Der Wickelkörper hat beispielsweise einen kreisförmigen Querschnitt, insbesondere einen nicht-kreisförmigen Querschnitt, da dann die vorliegende Kompensation besonders effektiv ist.

Dabei wird der Schritt a) insbesondere bei einer Messfahrt, d. h. vor einem Regelbetrieb der Wickelmaschine, durchgeführt, bei der die für die Prozessgüte ausschlaggebende Störgröße aufgezeichnet wird. Die aufgenommene oder aufgezeichnete Störgröße wird dann mittels einer Transformation, beispielsweise einer Fourier-Transformation, wie einer FFT (Fast-Fourier-Transformation), in den Frequenzbereich transformiert und kann anschließend analysiert werden. Hochfrequente Anteile dieses Signals, welche durch den Antriebsstrang nicht übertragen werden können, können aus dem Signal in dem Schritt gefiltert werden. Das gefilterte Signal wird mit einer inversen Transformation, beispielsweise einer inversen FFT, wieder in den Zeitbereich konvertiert. Das dabei gewonnene Kompensationssignal kann dann nach einer Transformation von dem Zeitbereich in den Ortsbereich vorgesteuert werden, um die störenden Prozesseinflüsse des Wickelvorgangs zu kompensieren. Des Weiteren hat das vorliegende Verfahren den Vorteil, dass andere mechanische Einflüsse, wie zum Beispiel Unwuchten der Umlenkrolle oder anderer Wickel-Einrichtungen, bei der Montage ebenfalls automatisch berücksichtigt werden.

Durch das vorliegende Verfahren kann vorteilhafterweise die Prozessgeschwindigkeit bei einer bestehenden Mechanik der Wickelmaschine erhöht werden. Des Weiteren kann auch die Prozessgüte bei bestehender Mechanik der Wickelmaschine durch das vorliegende Verfahren erhöht werden.

Störungen beim Wickelvorgang können beispielsweise durch Unwuchten bei der Montage einer oder mehrerer der Wickel-Einrichtungen oder durch eine veränderliche freie Länge des Wickelgutes zwischen der Umlenkrolle und dem Wickelkörper, insbesondere bei Einsatz eines Wickelkörpers mit nicht-kreisförmigem Querschnitt, verursacht sein. Das Kompensationssignal bzw. die Kompensationssignale können vorteilhafterweise diese Störungen kompensieren.

Die Störgröße ist insbesondere eine über eine Mehrzahl von Wicklungen oder zumindest Teil eines Wickelzyklus aufgenommene Differenz zwischen einem Ist-Wert und einem Soll-Wert. Eine solche Differenz kann beispielsweise bei einem Wickelkörper mit nicht-kreisförmigem Querschnitt zumindest teilweise bedingt sein durch eine aufgrund des nicht-kreisförmigen Querschnitts des Wickelgutes veränderlichen freien Länge des Wickelgutes zwischen der Umlenkrolle und dem Wickelkörper. Beispiele für solche Ist-Werte und Soll-Werte umfassen eine Ist-Wickelspannung des Wickelgutes und eine Soll-Wickelspannung des Wickelgutes sowie ein Ist-Moment und ein Soll-Moment. Ein weiteres Beispiel für eine Störgröße ist eine Tänzerposition-Abweichung einer Soll-Position der Tänzerrolle von einer Ist-Position der Tänzerrolle beim Wickelvorgang.

Das positionsabhängige Kompensationssignal wird insbesondere vorab für einen Gesamtwickelvorgang oder für einen Teilwickelvorgang berechnet und in einer Speichereinheit abgelegt. Insbesondere wird das berechnete Kompensationssignal in einer Tabelle oder Polynomtabelle, auch Kurvenscheibe genannt, abgelegt.

Als freie Länge des Wickelgutes wird insbesondere die Bahnlänge des Wickelgutes zwischen der Umlenkrolle und dem Wickelkörper bezeichnet. Bei mehreren in der Wickelmaschine vorgesehenen Umlenkrollen ist insbesondere die dem Wickelkörper unmittelbar vorgeschaltete Umlenkrolle gemeint. Beispielsweise ist die freie Länge des Wickelgutes die Bahnlänge zwischen dem Auflagepunkt des Wickelgutes auf der Umlenkrolle und dem Auflagepunkt des Wickelgutes auf dem Wickelkörper.

Unter der Wickelspannung wird die Spannung, insbesondere die mechanische Spannung, des Wickelgutes beim Aufwickeln verstanden. Insbesondere ist die Wickelspannung definiert als die Kraft, welche auf das Wickelgut senkrecht zu seiner Querschnittfläche wirkt, dividiert durch die Querschnittfläche.

Unter der Soll-Wickelspannung wird die Wickelspannung verstanden, mit welcher das Wickelgut auf den Wickelkörper aufgewickelt werden soll. Die Soll-Wickelspannung kann auch als vorgesehene Wickelspannung bezeichnet werden. Die Soll-Wickelspannung kann als Funktion der Ausrichtung des Wickelkörpers dargestellt sein. Beispielhaft ist dies bei einer Wicklung eines Drahtes als Wickelgut um einen eckigen Wickelkörper relevant, um ein optimiertes Ergebnis zu erzielen.

Bevorzugt ist die Wickelspannung proportional zu der Krümmung des Wickelkörpers an dem Auflagepunkt des Wickelkörpers. Eine solche Proportionalität ist insbesondere vorteilhaft beim Wickeln von Metalldrähten. Unter einem nicht-kreisförmigen Querschnitt wird ein Querschnitt verstanden, der von einer Kreisform abweicht. Das heißt, das Wickelgut hat einen nichtkonstanten Durchmesser, d.h. zumindest zwei unterschiedliche Durchmesser. Beispielhaft ist ein solcher Wickelkörper mit nicht-kreisförmigen Querschnitt ellipsenförmig oder rechteckig geformt.

Beispielsweise werden mit dem vorliegenden Verfahren Batteriezellen oder Folienkondensatoren erzeugt. Unter einer Versorgungsrolle wird insbesondere eine Einrichtung zur Aufbewahrung des Wickelgutes in der Wickelmaschine verstanden. Beispielhaft ist die Versorgungsrolle eine Drahtrolle oder eine Rolle, auf welcher Folie aufgerollt ist. Dem Wickelkörper kann eine erste Drehgeschwindigkeit zugeordnet sein, wohingegen der Versorgungsrolle eine zweite Drehgeschwindigkeit zugeordnet werden kann, so dass die Versorgungsrolle das Wickelgut mit einer zu der zweiten Drehgeschwindigkeit proportionalen Geschwindigkeit bereitstellt. Bei der Umlenkrolle ist bevorzugt diejenige Umlenkrolle gemeint, von der aus das Wickelgut zum Wickelkörper geführt wird.

Die Wickelspannung kann auch als Bahnspannung oder Wickelgutspannung bezeichnet werden. Bei einem Wickelvorgang auf einen Wickelkörper mit nicht-kreisrundem Querschnitt verändert sich der Abschnitt zwischen dem Auflagepunkt des Wickelgutes auf dem Wickelkörper und dem Auflagepunkt des Wickelgutes auf der vorgeschalteten Umlenkrolle bei Rotation des Wickelkörpers. Diese Veränderung ist, wie vorliegend, als veränderliche freie Länge des Wickelgutes zwischen der Umlenkrolle und dem Wickelkörper bezeichnet. Die Veränderung dieses Abstandes zwischen den Auflagepunkten hat eine Veränderung der Ist-Wickelspannung zur Folge, auch aufgrund dessen wird durch das vorliegende Verfahren die Ist-Wickelspannung auf die Soll-Wickel-spannung eingestellt. Unter Einstellen ist vorliegend insbesondere ein Steuern oder ein Regeln gemeint.

Vorzugsweise ist die Ist-Wickelspannung konstant, insbesondere während eines Wickelzyklus aus N Umdrehungen des Wickelkörpers. Die Ist-Wickelspannung ist vorzugsweise bei einer Batteriezellenfertigung und der Wicklung von Kondensatoren konstant zu halten. Unter "konstant" ist hierbei insbesondere zu verstehen, dass die Wickelspannung, insbesondere an dem Auflagepunkt des Wickelgutes, auf dem (insbesondere bereits bewickelten) Wickelkörper während des Wickelvorgangs gleichbleibt.

Gemäß einer Ausführungsform wird das dem Antrieb zugeordnete Filter in Abhängigkeit von Parametern der dem Antrieb zugeordneten Wickel-Einrichtung parametrisiert.

Beispielsweise hat die Versorgungsrolle im Betrieb eine bestimmte Drehfrequenz (Betriebsfrequenz). Folglich wird die Versorgungsrolle, falls Störungen beim Wickelvorgang auftreten, Anteile bei der aufgenommenen Störgröße bei dieser bestimmten Drehfrequenz oder einer oder mehrerer ihrer Harmonischen haben. Basierend auf diesen Parametern wird dann das dem Antrieb der Versorgungsrolle zugeordnete Filter parametrisiert. Das so parametrisierte Filter kann dann die durch die Versorgungsrolle verursachten Anteile bei der Störgröße im Frequenzbereich herausfiltern, so dass das für den Antrieb der Versorgungsrolle zu generierende Kompensationssignal entsprechend bereitgestellt werden kann. Filtern oder Herausfiltern kann auch als Extrahieren bezeichnet werden.

Gemäß einer weiteren Ausführungsform werden bei dem Filtern des Spektrums in dem Schritt c) Frequenzen des Spektrums oberhalb einer bestimmten Grenzfrequenz ausgeblendet oder unterdrückt.

Solche Frequenzen oberhalb der bestimmten Grenzfrequenz werden vorteilhafterweise unterdrückt, da sie von der Mechanik der Wickelmaschine nicht übertragen werden können und damit bei der Generierung des Kompensationssignals oder der Kompensationssignale nicht berücksichtigt werden müssen. Hierdurch reduziert sich vorteilhafterweise das Schadenspotenzial.

Gemäß einer weiteren Ausführungsform werden bei dem Filtern des Spektrums in dem Schritt c) solche Teil-Spektren des Spektrums, welche von einer Betriebsfrequenz der dem Antrieb zugeordneten Wickel-Einrichtung abhängig sind, herausgefiltert. Dann werden in dem Schritt d) die herausgefilterten Teil-Spektren von dem Frequenzbereich in den Zeitbereich zur Bereitstellung des zeitabhängigen Kompensationssignals für den Antrieb transformiert.

Damit können für den jeweiligen Antrieb spezifische Kompensationssignale generiert werden. Das jeweilige Teil-Spektrum bezieht sich dabei auf die jeweilige die Störung beeinflussende Wickel-Einrichtung, und das entsprechende Kompensationssignal wird für den Antrieb dieser Wickel-Einrichtung generiert.

Gemäß einer weiteren Ausführungsform werden bei dem Filtern des Spektrums in dem Schritt c) solche Teil-Spektren des Spektrums, welche einer Betriebsfrequenz der dem Antrieb zugeordneten Wickel-Einrichtung oder einer ihrer Harmonischen entsprechen, herausgefiltert. Dann werden in dem Schritt d) die herausgefilterten Teil-Spektren von dem Frequenzbereich in den Zeitbereich zur Bereitstellung des zeitabhängigen Kompensationssignals für den Antrieb transformiert.

Gemäß einer weiteren Ausführungsform wird nach dem Schritt b) das Spektrum zur Zuordnung zumindest eines Teil-Spektrums zu einer die Störung zumindest teilweise verursachenden Wickel-Einrichtung analysiert.

Die Wickelmaschine umfasst eine Mehrzahl von Wickel-Einrichtungen, wie die Versorgungsrolle, den Wickelkörper und beispielsweise die Tänzerrolle. Die jeweilige Wickel-Einrichtung wird insbesondere nur einen Teil der Störung verursachen und damit nur teilweise zu der Störgröße beitragen. Entsprechend wird das Spektrum der Störgröße analysiert, und das jeweilige Teil-Spektrum wird der jeweils verursachenden Wickel-Einrichtung zugeordnet.

Dann wird das jeweilige einer der Wickel-Einrichtungen zugeordnete Teil-Spektrum gefiltert oder ermittelt, insbesondere in Abhängigkeit eines Ergebnisses des Analysierens gefiltert oder ermittelt. Folglich wird das gefilterte Teil-Spektrum von dem Frequenzbereich in den Zeitbereich zur Bereitstellung zumindest eines Teils des zeitabhängigen Kompensationssignal für den der verursachenden Wickel-Einrichtung zugeordneten Antrieb transformiert.

Das bereitgestellte Kompensationssignal ist damit jeweils spezifisch für die verursachende Wickel-Einrichtung und wird zum Beispiel zur Vorsteuerung des Antriebs der verursachenden Wickel-Einrichtung eingesetzt.

Gemäß einer weiteren Ausführungsform wird in dem Schritt a) die Störgröße im Zeitbereich während einer Messfahrt, insbesondere vor einem Regelbetrieb der Wickelmaschine, als zeitdiskretes Signal aufgenommen.

Das zeitdiskrete Signal als Repräsentation der aufgenommenen Störgröße wird dann beispielsweise mittels einer FFT in den Frequenzbereich in dem Schritt b) transformiert.

Gemäß einer weiteren Ausführungsform wird in dem Schritt b) die aufgenommene Störgröße von dem Zeitbereich mittels einer Frequenztransformation, insbesondere mittels einer Fourier-Transformation, in das Spektrum im Frequenzbereich transformiert.

Beispiele für die Fourier-Transformation umfassen die FFT (Fast-Fourier-Transformation) und die DFT (Discrete-Fourier-Transformation).

Gemäß einer weiteren Ausführungsform wird als Fourier-Transformation eine FFT (Fast-Fourier-Transformation) verwendet. Dabei wird in dem Schritt a) die Störgröße zur Bereitstellung eines zeitdiskreten Signals mit einer ersten Abtastrate abgetastet. Das abgetastete Signal wird mittels einer Interpolation, beispielsweise mittels C-Splines, interpoliert und das interpolierte Signal wird mit einer zweiten Abtastrate abgetastet, so dass die Anzahl der Abtaststellen einer Zweierpotenz entspricht. Sodann wird in dem Schritt b) das mit der zweiten Abtastrate abgetastete Signal mittels der FFT in den Frequenzbereich transformiert. Die erste Abtastrate kann insbesondere auch als reale Abtastrate der Steuereinrichtung oder des Controllers bezeichnet werden. Die zweite Abtastrate kann insbesondere auch als manipulierte Abtastrate der Kurvenscheibe bezeichnet werden.

Durch die Verwendung der C-Splines und der erneuten Abtastung mittels der zweiten Abtastrate ist es vorliegend nicht nötig, das zunächst abgetastete Signal mittels Nullen (zero-padding) aufzufüllen.

Gemäß einer weiteren Ausführungsform wird der Antrieb mittels des positionsabhängigen Kompensationssignals vorgesteuert.

Gemäß einer weiteren Ausführungsform wird das zeitabhängige Kompensationssignal in Abhängigkeit von einer jeweiligen Position des Wickelkörpers für einen Wickelzyklus aus N Umdrehungen des Wickelkörpers in das positionsabhängige Kompensationssignal transformiert und in einer Tabelle einer Speichereinheit gespeichert.

Insbesondere wird die jeweilige Position des Wickelkörpers für einen Wickelzyklus aus N Umdrehungen des Wickelkörpers in Abhängigkeit von der Wickellänge des Wickelgutes und von der Drehgeschwindigkeit des Wickelkörpers ermittelt.

Gemäß einer weiteren Ausführungsform wird als Tabelle zum Speichern des positionsabhängigen Kompensationssignals eine Polynom-Tabelle verwendet. Die Polynomtabelle kann auch als Kurvenscheibe bezeichnet werden.

Gemäß einer weiteren Ausführungsform wird für einen jeden der Antriebe der Wickel-Einrichtungen ein jeweiliges positionsabhängiges Kompensationssignal durch ein jeweiliges Durchführen der Schritte a) bis e) bereitgestellt.

Damit wird für den jeweiligen Antrieb einer jeden der Wickel-Einrichtungen ein spezifisches positionsabhängiges Kompensationssignal bereitgestellt, so dass Störungen in optimaler Weise und insbesondere an den richtigen Stellen der Wickelmaschine kompensiert werden können.

Insbesondere weist die Wickelmaschine als angetriebene Wickel-Einrichtungen neben der Versorgungsrolle und dem Wickelkörper eine Tänzerrolle und einen Vorschub auf, der zwischen der Versorgungsrolle und der Tänzerrolle angeordnet ist. Die Tänzerrolle wirkt dabei als Einstelleinheit oder als Teil einer Einstelleinheit. Zusätzlich oder alternativ kann die Einstelleinheit einen Wickelgutspeicher aufweisen.

Hierbei wird das Wickelgut über eine Umlenkrolle geleitet, wobei die Umlenkrolle mit einem Servomotor gekoppelt ist und mit einer Einstellung der Drehgeschwindigkeit die Wickelspannung eingestellt wird.

Ein Wickelgutspeicher weist eine Mehrzahl von Umlenkrollen auf, wobei das Wickelgut durch die Mehrzahl von Umlenkrollen auf einer, in der Länge veränderlichen Bahn gehalten wird. Durch eine Veränderung der Position zumindest einer der Umlenkrollen ist eine Einstellung der Länge der Bahn möglich. Die Länge der Bahn des Wickelgutes entspricht der Kapazität des Wickelgutspeichers. Die Veränderung der Position der jeweiligen Umlenkrolle erfolgt insbesondere durch ein Stellglied.

Ein Wickelgutspeicher kann zum Ausgleich von Schwankungen der Wickelspannung mit einer Tänzerrolle kombiniert werden.

Gemäß einem zweiten Aspekt wird eine Wickelmaschine zum Wickeln eines Wickelgutes vorgeschlagen. Die Wickelmaschine weist eine Anzahl von durch eine Anzahl von Antrieben antreibbaren Wickel-Einrichtungen, welche zumindest eine Versorgungsrolle zum Bereitstellen des Wickelgutes und einen Wickelkörper umfassen, und eine Steuereinrichtung, insbesondere gemäß dem nachfolgenden vierten Aspekt, auf. Die Steuereinrichtung ist dazu eingerichtet, beim Aufwickeln des von der Versorgungsrolle bereitgestellten Wickelgutes über zumindest eine Umlenkrolle auf den Wickelkörper zumindest einen der Antriebe in Abhängigkeit eines eine Störung zumindest teilweise kompensierenden positionsabhängigen Kompensationssignals einzustellen. Zum Bereitstellen des positionsabhängigen Kompensationssignals für den jeweiligen Antrieb weist die Steuereinrichtung auf:
eine erste Einheit zum Aufnehmen einer die Störung repräsentierenden Störgröße im Zeitbereich während eines Wickelvorgangs,
eine zweite Einheit zum Transformieren der aufgenommenen Störgröße von dem Zeitbereich in ein Spektrum im Frequenzbereich,
eine dritte Einheit zum Filtern des Spektrums mittels eines für die dem Antrieb zugeordnete Wickel-Einrichtung spezifischen Filters,
eine vierte Einheit zum Transformieren des gefilterten Spektrums von dem Frequenzbereich in den Zeitbereich zur Bereitstellung eines zeitabhängigen Kompensationssignals, und
eine fünfte Einheit zum Transformieren des zeitabhängigen Kompensationssignals in das positionsabhängige Kompensationssignal.

Die jeweilige Einheit kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem dritten Aspekt wird ein Computerprogrammprodukt vorgeschlagen, welches auf der Steuereinrichtung der Wickelmaschine gemäß dem zweiten Aspekt die Durchführung des wie oben erläuterten Verfahrens zum Wickeln eines Wickelgutes von einer Versorgungsrolle auf einen Wickelkörper veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem vierten Aspekt wird eine Steuereinrichtung für die Wickelmaschine gemäß dem zweiten Aspekt vorgeschlagen, wobei die Steuereinrichtung dazu eingerichtet ist, mit Hilfe von den Antrieben das wie oben erläuterte Verfahren zum Wickeln eines Wickelgutes von einer Versorgungsrolle auf einen Wickelkörper auszuführen.

Die Steuereinrichtung kann hardwaretechnisch und/oder auch softwaretechnisch implementiert sein. Bei einer hardwaretechnischen Implementierung kann die Steuereinrichtung als Vorrichtung oder als Teil einer Vorrichtung, zum Beispiel als Computer oder als Mikroprozessor oder als Steuerrechner ausgebildet sein. Bei einer softwaretechnischen Implementierung kann die Steuereinrichtung als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Steuereinrichtung sowie für die vorgeschlagene Wickelmaschine entsprechend.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Ansicht eines Ausführungsbeispiels einer Wickelmaschine;
Fig. 2 zeigt ein schematisches Ablaufdiagramm eines Ausführungsbeispiels eines Verfahrens zum Wickeln eines Wickelgutes von einer Versorgungsrolle auf einen Wickelkörper;
Fig. 3 zeigt ein schematisches Blockdiagramm eines Ausführungsbeispiels eines Verfahrens zum Bereitstellen von positionsabhängigen Kompensationssignalen für Antriebe von zwei Wickel-Einrichtungen der Wickelmaschine nach Fig. 1; und
Fig. 4 zeigt ein schematisches Blockdiagramm eines Ausführungsbeispiels einer Steuereinrichtung für eine Wickelmaschine.

In den Figuren sind gleiche oder funktionsgleiche Elemente mit denselben Bezugszeichen versehen worden, sofern nichts anderes angegeben ist.

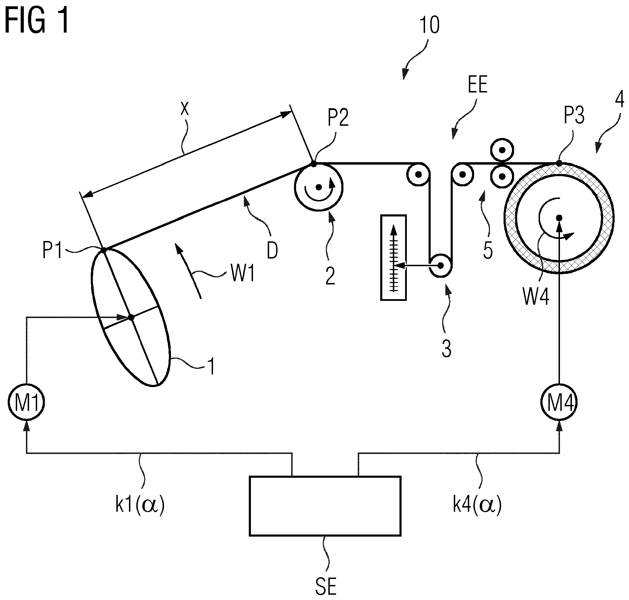

In Fig. 1 ist eine schematische Ansicht eines Ausführungsbeispiels einer Wickelmaschine 10 dargestellt.

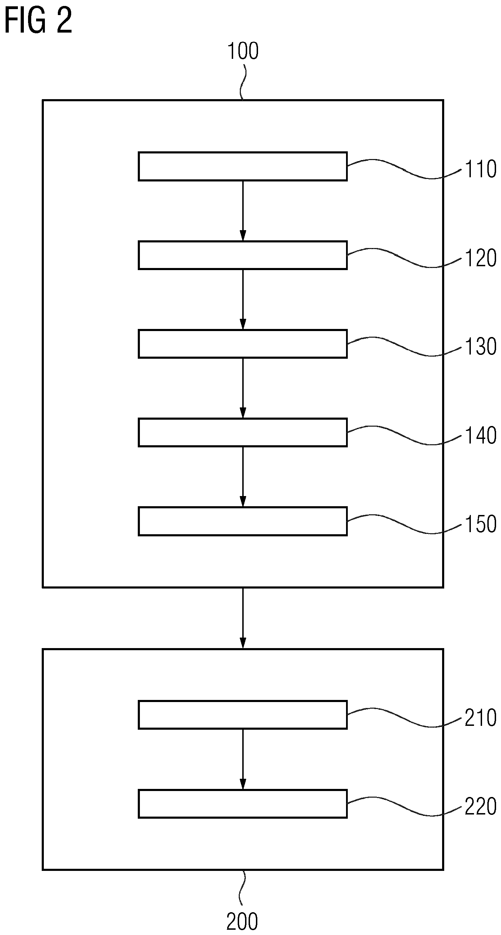

Ferner zeigt die Fig. 2 ein schematisches Ablaufdiagramm eines Ausführungsbeispiels eines Verfahrens zum Wickeln eines Wickelgutes D von einer Versorgungsrolle 4 der Wickelmaschine 10 auf einen Wickelkörper 1 mit nicht-kreisförmigem Querschnitt. Im Folgenden werden die Fig. 1 und 2 unter Bezugnahme aufeinander erläutert:
Die Wickelmaschine 10 der Fig. 1 umfasst einen Wickelkörper 1, eine Umlenkrolle 2, eine Tänzerrolle 3, eine Versorgungsrolle 4 und einen Vorschub 5. Die Tänzerrolle 3 wirkt dabei als Einstelleinheit EE. Zusätzlich oder alternativ kann die Einstelleinheit EE eine Wickelgutbremse oder einen Wickelgutspeicher aufweisen. Der Vorschub 5 ist zwischen der Versorgungsrolle 4 und der Tänzerrolle 3 angeordnet und versorgt die Tänzerrolle 3 mit dem Wickelgut D.

Der Wickelkörper 1 sowie die Versorgungsrolle 4 sind über Antriebe M1, M4 antreibbar. Der Antrieb M1 ist dabei dem Wickelkörper 1 zugeordnet, und der Antrieb M4 ist der Versorgungsrolle 4 zugeordnet. Damit sind der Wickelkörper 1 und die Versorgungsrolle 4 Beispiele für durch Antriebe M1, M4 antreibbare Wickel-Einrichtungen der Wickelmaschine 10. Auch dem Vorschub 5 kann ein Antrieb (nicht gezeigt) zugeordnet sein.

Die Antriebe M1, M4 können über eine Steuereinrichtung SE gesteuert oder geregelt werden. Insbesondere steuert oder regelt die Steuereinrichtung SE die Antriebe M1, M4 oder Motoren des Wickelkörpers 1 und/oder der Versorgungsrolle 4. Der Wickelkörper 1 dreht sich beim Wickelvorgang mit einer ersten Drehgeschwindigkeit W1. Die Versorgungsrolle 4 dreht sich mit einer zweiten Drehgeschwindigkeit W4. Der Wickelkörper 1 wird mit dem Wickelgut D umwickelt. Das Wickelgut D durchläuft die Wickelmaschine 10 mit einer bestimmten Geschwindigkeit. Das Wickelgut D weist beim Wickelvorgang eine bestimmte Wickelspannung auf. Die bestimmte Wickelspannung wird mit Hilfe des Antriebs M1 des Wickelkörpers 1 und mit Hilfe des Antriebs M4 für die Versorgungsrolle 4 auf eine Soll-Wickelspannung oder vorgesehene Wickelspannung eingestellt.

Dabei wird das Wickelgut D von der Versorgungsrolle 4 über eine Umlenkrolle 2 zu dem Wickelkörper 1 geführt. Hierbei wird das Wickelgut D von der Umlenkrolle 2 auf den Wickelkörper 1 gewickelt. In Fig. 1 bezeichnen hierbei P1 den Auflagepunkt des Wickelgutes D auf den Wickelkörper 1, P2 den Auflagepunkt des Wickelgutes D auf der Umlenkrolle 2 und P3 den Auflagepunkt des Wickelgutes D auf der Versorgungsrolle 4. Das Wickelgut D verlässt die Umlenkrolle 2 an dem Auflagepunkt P2. Das Wickelgut D berührt den Wickelkörper 1 an dem Auflagepunkt P1. Zwischen dem Auflagepunkt P1 und dem Auflagepunkt P2 erstreckt sich die freie Länge x. Die freie Länge x entspricht der Länge des Wickelgutes D zwischen der Umlenkrolle 2 und dem Wickelkörper 1. Die freie Länge x ändert sich während des Wickelvorgangs periodisch. Darüber hinaus ändert sich der Auflagepunkt P2 auf der Umlenkrolle 2 ebenso periodisch.

Im Folgenden nun zu dem Verfahren nach Fig. 2.

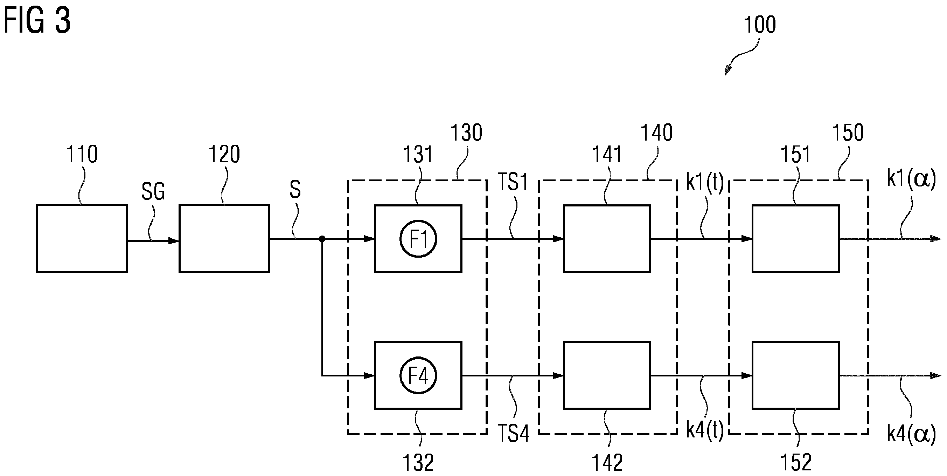

Der Block 100 in Fig. 2 bezeichnet eine Messfahrt zur Generierung der positionsabhängigen Kompensationssignale k1(α), k4(α), und der Block 200 bezeichnet einen Betrieb (Regelbetrieb) der Wickelmaschine 10. Weitere Details zu dem Block 100 sind mit Bezug zu Fig. 3 erläutert, welche Details hinsichtlich der Generierung des positionsabhängigen Kompensationssignals k1(α) für den Antrieb M1 des Wickelkörpers 1 und des positionsabhängigen Kompensationssignals k4(α) für den Antrieb M4 der Versorgungsrolle 4 beschreibt.

Das Beispiel des Verfahrens der Fig. 2 umfasst die Messfahrt 100 mit den Schritten 110 bis 150 sowie den Regelbetrieb 200 mit den Schritten 210 und 220:
Gemäß dem Block 100 wird das positionsabhängige Kompensationssignal k1(α), k4(α) für den jeweiligen Antrieb M1, M4 durch die folgenden Schritte 110 bis 150 bereitgestellt.

In Schritt 110 wird eine die Störung beim Wickeln repräsentierende Störgröße SG im Zeitbereich während einer Messfahrt, insbesondere vor einem Regelbetrieb 200 der Wickelmaschine 10, als zeitdiskretes Signal aufgenommen, insbesondere abgetastet.

In Schritt 120 wird die aufgenommene Störgröße SG von dem Zeitbereich in ein Spektrum S im Frequenzbereich transformiert. Hierbei wird insbesondere eine Fourier-Transformation verwendet, beispielsweise eine FFT (Fast-Fourier-Transformation).

Insbesondere wird in dem Schritt 110 die Störgröße SG zur Bereitstellung eines zeitdiskreten Signals mittels einer ersten Abtastrate abgetastet. Das abgetastete Signal wird dann mittels C-Splines interpoliert, und das interpolierte Signal wird mit einer zweiten Abtastrate abgetastet, so dass die Anzahl der Abtaststellen einer Zweierpotenz entspricht. Sodann wird in dem Schritt 120 das mit der zweiten Abtastrate abgetastete Signal mittels der FFT in den Frequenzbereich transformiert.

In Schritt 130 wird das Spektrum S mittels eines für die dem Antrieb M1, M4 zugeordnete Wickel-Einrichtung 1, 4 spezifischen Filters F1, F4 gefiltert. In dem vorliegenden Beispiel ist dem Wickelkörper 1 als Wickel-Einrichtung der Antrieb M1 zugeordnet. Dem Antrieb M1 ist wiederum ein spezifisches Filter F1 zugeordnet (siehe Fig. 3).

Entsprechend ist dem Antrieb M4 für die Versorgungsrolle 4 als Wickel-Einrichtung der Antrieb M4 zugeordnet. Entsprechend ist dem Antrieb M4 das Filter F4 zugeordnet (siehe Fig. 3) .

In Schritt 140 wird das gefilterte Spektrum (siehe TS1, TS4 in Fig. 3) von dem Frequenzbereich in den Zeitbereich zur Bereitstellung eines zeitabhängigen Kompensationssignals k1(t), k4(t) transformiert. Hierzu wird eine zu der in Schritt 120 inverse Transformation eingesetzt. Wenn beispielsweise im Schritt 120 eine FFT eingesetzt worden ist, so wird in Schritt 140 eine inverse FFT verwendet.

In Schritt 150 wird das zeitabhängige Kompensationssignal k1(t), k4(t) in das positionsabhängige Kompensationssignal k1(α), k4(α) transformiert.

Im Anschluss kann der jeweilige Antrieb M1, M4 mittels des jeweiligen positionsabhängigen Kompensationssignals k1(α), k4(α) vorgesteuert werden. In dem Beispiel der Fig. 1 wird ein positionsabhängiges Kompensationssignal k1(α) für den Antrieb M1 des Wickelkörpers 1 generiert, und ein weiteres positionsabhängiges Kompensationssignal k4(α) wird für den Antrieb M4 der Versorgungsrolle 4 generiert. Des Weiteren ist es möglich, ein weiteres kompensationsabhängiges Kompensationssignal (nicht gezeigt) für die Einstelleinheit EE der Tänzerrolle 3, wenn der Tänzerrolle 3 ein Antrieb zugeordnet ist, zu generieren.

Wie oben ausgeführt, zeigt Fig. 3 ein schematisches Ablaufdiagramm eines detaillierten Ausführungsbeispiels eines Verfahrens zum Generieren eines positionsabhängigen Kompensationssignals k1(α) für den Antrieb M1 des Wickelkörpers 1 und eines positionsabhängigen Kompensationssignals k4(α) für die Versorgungsrolle 4.

Die Schritte 110 bis 150 des Blockes 100 der Fig. 3 basieren auf den Schritten 110 bis 150 des Blockes 100 der Fig. 2, wobei die Schritte 130 bis 150 für die beiden Antriebe M1, M4 bzw. für die Generierung der beiden positionsabhängigen Kompensationssignale k1(α) und k4(α) differenzieren.

Hierzu im Detail zu den Schritten 110 bis 150 der Fig. 3:
In Schritt 110 wird die die Störung repräsentierende Störgröße SG im Zeitbereich während eines Wickelvorgangs aufgenommen.

In Schritt 120 wird die Störgröße SG in ein Spektrum S im Frequenzbereich transformiert.

Im Folgenden gibt es bei den Schritten 130 bis 150 einen jeweiligen Pfad für den jeweiligen Antrieb M1, M4. Der Pfad für den Antrieb M1 und damit für das entsprechende positionsabhängige Kompensationssignal k1(α) umfasst die Schritte 131, 141 und 151. Der Pfad für den Antrieb M4 bzw. das entsprechende positionsabhängige Kompensationssignal k4(α) umfasst die Schritte 132, 142 und 152.

In dem Schritt 131 werden solche Teil-Spektren TS1 des Spektrums S, welche einer Betriebsfrequenz des dem Antrieb M1 zugeordneten Wickelkörpers 1 oder einer oder mehrerer ihrer Harmonischen entsprechen, herausgefiltert. In dem darauffolgenden Schritt 141 wird das herausgefilterte Teil-Spektrum TS1 von dem Frequenzbereich in den Zeitbereich zur Bereitstellung eines zeitabhängigen Kompensationssignals k1(t) für den Antrieb M1 transformiert. In dem Schritt 151 wird dann das zeitabhängige Kompensationssignal k1(t) in das positionsabhängige Kompensationssignal k1(α) für den Antrieb M1 transformiert.

Analog wird das positionsabhängige Kompensationssignal k4(α) für den Antrieb M4 der Versorgungsrolle 4 generiert. In dem Schritt 132 werden solche Teil-Spektren TS4 des Spektrums S, welche einer Betriebsfrequenz der dem Antrieb M4 zugeordneten Versorgungsrolle 4 oder einer ihrer Harmonischen entsprechen, herausgefiltert. In dem darauffolgenden Schritt 142 wird das herausgefilterte Teil-Spektrum TS4 von dem Frequenzbereich in den Zeitbereich zur Bereitstellung eines zeitabhängigen Kompensationssignals k4(t) für den Antrieb M4 transformiert. In dem Schritt 152 wird dann das zeitabhängige Kompensationssignal k4(t) in das positionsabhängige Kompensationssignal k4(α) für den Antrieb M4 transformiert.

Insgesamt ist das Filter F1 für den Antrieb M1 spezifisch, und das Filter F4 ist für den Antrieb M4 spezifisch. Entsprechend ist das Filter F1 in Abhängigkeit von Parametern des Wickelkörpers 1, insbesondere seiner Drehgeschwindigkeit W1, parametrisiert. Entsprechend ist das Filter F4 abhängig von Parametern der dem Antrieb M4 zugeordneten Versorgungsrolle 4, insbesondere deren Drehgeschwindigkeit W4 während des Betriebs der Wickelmaschine 10, parametrisiert.

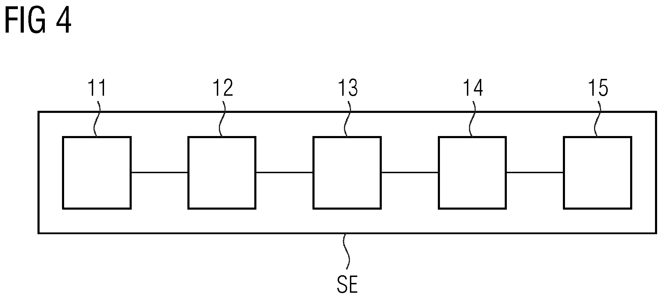

Ferner zeigt Fig. 4 ein schematisches Blockdiagramm eines Ausführungsbeispiels einer Steuereinrichtung SE (siehe auch Fig. 1) für eine Wickelmaschine 10. Die Steuereinrichtung SE umfasst zum Bereitstellen des positionsabhängigen Kompensationssignals k1(α), k4(α) für den jeweiligen Antrieb M1, M4 eine erste Einheit 11, eine zweite Einheit 12, eine dritte Einheit 13, eine vierte Einheit 14 und eine fünfte Einheit 15.

Die erste Einheit 11 ist dazu eingerichtet, eine die Störung repräsentierende Störgröße SG im Zeitbereich während eines Wickelvorgangs aufzunehmen.

Die zweite Einheit 12 ist dazu eingerichtet, die aufgenommene Störgröße SG von dem Zeitbereich in ein Spektrum S im Frequenzbereich zu transformieren.

Die dritte Einheit 13 ist dazu eingerichtet, das Spektrum S mittels eines für die dem Antrieb M1, M4 zugeordnete Wickel-Einrichtung 1, 4 spezifischen Filters F1, F4 zu filtern.

Die vierte Einheit 14 ist dazu eingerichtet, das gefilterte Spektrum TS1, TS4 von dem Frequenzbereich in den Zeitbereich zur Bereitstellung eines zeitabhängigen Kompensationssignals k1(t), k4(t) zu transformieren.

Die fünfte Einheit 15 ist dazu eingerichtet, das zeitabhängige Kompensationssignal k1(t), k4(α) in das positionsabhängige Kompensationssignal k1(α), k4(α) zu transformieren.

Ferner ist die Steuereinrichtung SE dazu eingerichtet, beim Aufwickeln des von der Versorgungsrolle 4 bereitgestellten Wickelgutes D zumindest einen der Antriebe M1, M4 (in dem Beispiel der Fig. 1 beide Antriebe M1 und M4) in Abhängigkeit der positionsabhängigen Kompensationssignale k1(α), k4(α) einzustellen, beispielsweise vorzusteuern oder zu regeln.

### Bezugszeichenliste

- D: Wickelgut
- F1: Filter
- F4: Filter
- k1(t): zeitabhängiges Kompensationssignal für den Antrieb M1
- k1(α): positionsabhängiges Kompensationssignal für den Antrieb M1
- k4(t): zeitabhängiges Kompensationssignal für den Antrieb M4
- k4(α): positionsabhängiges Kompensationssignal für den Antrieb M4
- M1: Antrieb für Wickelkörper
- M4: Antrieb für Versorgungsrolle
- P1: Auflagepunkt des Wickelgutes auf dem Wickelkörper
- P2: Auflagepunkt des Wickelgutes auf der Umlenkrolle
- P3: Auflagepunkt des Wickelgutes auf der Versorgungsrolle
- S: Spektrum
- SG: Störgröße
- TS1: Teil-Spektrum
- TS4: Teil-Spektrum
- W1: Drehgeschwindigkeit des Wickelkörpers
- W4: Drehgeschwindigkeit der Versorgungsrolle
- x: Freie Länge des Wickelgutes
- α: Position des Wickelkörpers

- 1: Wickelkörper
- 2: Umlenkrolle
- 3: Tänzerrolle
- 4: Versorgungsrolle
- 5: Vorschub
- 10: Wickelmaschine
- 100: Messfahrt
- 110 - 150: Verfahrensschritte der Messfahrt
- 200: Betrieb
- 210 - 220: Verfahrensschritte des Betriebs

## Patentansprüche

1. Verfahren zum Wickeln eines Wickelgutes (D) mittels einer Wickelmaschine (10) aufweisend eine Anzahl von durch einen jeweiligen zugeordneten Antrieb (M1, M4) antreibbaren Wickel-Einrichtungen (1, 4), welche zumindest eine Versorgungsrolle (4) und einen Wickelkörper (1) umfassen, mit den Schritten:
Bereitstellen (210) des Wickelgutes (D) von der Versorgungsrolle (4), und
Aufwickeln (220) des von der Versorgungsrolle (4) bereitgestellten Wickelgutes (D) über zumindest eine Umlenkrolle (2) auf den Wickelkörper (1), wobei zumindest einer der Antriebe (M1, M4) in Abhängigkeit eines eine Störung zumindest teilweise kompensierenden positionsabhängigen Kompensationssignals (k1(α), k4(α)) eingestellt wird, **dadurch gekennzeichnet, dass** das positionsabhängige Kompensationssignal (k1(α), k4(α)) für den jeweiligen Antrieb (M1, M4) durch die folgenden Schritte bereitgestellt wird:
a) Aufnehmen (110) einer die Störung repräsentierenden Störgröße (SG) im Zeitbereich während eines Wickelvorgangs,
b) Transformieren (120) der aufgenommenen Störgröße (S4) von dem Zeitbereich in ein Spektrum im Frequenzbereich,
c) Filtern (130) des Spektrums mittels eines für die dem Antrieb (M1, M4) zugeordnete Wickel-Einrichtung (1, 4) spezifischen Filters (F1, F2),
d) Transformieren (140) des gefilterten Spektrums (TS1, TS4) von dem Frequenzbereich in den Zeitbereich zur Bereitstellung eines zeitabhängigen Kompensationssignals (k1(t), k4(t)), und
e) Transformieren (150) des zeitabhängigen Kompensationssignals (b) in das positionsabhängige Kompensationssignal (k1(α), k4(α)).

2. Verfahren nach Anspruch 1,
**dadurch gekennzeichnet,**
**dass** das dem Antrieb (M1, M4) zugeordnete Filter in Abhängigkeit von Parametern der dem Antrieb (M1, M4) zugeordneten Wickel-Einrichtung (1, 4) parametrisiert wird.

3. Verfahren nach Anspruch 1,
**dadurch gekennzeichnet,**
**dass** bei dem Filtern des Spektrums (S) in dem Schritt c) Frequenzen des Spektrums (S) oberhalb einer bestimmten Grenzfrequenz ausgeblendet werden.

4. Verfahren nach einem der Ansprüche 1 bis 3,
**dadurch gekennzeichnet,**
**dass** bei dem Filtern des Spektrums (S) in dem Schritt c) (130) solche Teil-Spektren (TS1, TS2) des Spektrums (S), welche von einer Betriebsfrequenz der dem Antrieb (M1, M4) zugeordneten Wickel-Einrichtung (1, 4) abhängig sind, herausgefiltert werden,
wobei in dem Schritt d) (140) die herausgefilterten Teil-Spektren (TS1, TS4) von dem Frequenzbereich in den Zeitbereich zur Bereitstellung des zeitabhängigen Kompensationssignals (k1(t), k4(t)) für den Antrieb (M1, M4) transformiert werden.

5. Verfahren nach einem der Ansprüche 1 bis 3,
**dadurch gekennzeichnet,**
**dass** bei dem Filtern des Spektrums (S) in dem Schritt c) (130) solche Teil-Spektren (TS1, TS2) des Spektrums (S), welche einer Betriebsfrequenz der dem Antrieb (M1, M4) zugeordneten Wickel-Einrichtung (1, 4) oder einer ihrer Harmonischen entsprechen, herausgefiltert werden,
wobei in dem Schritt d) (140) die herausgefilterten Teil-Spektren (TS1, TS4) von dem Frequenzbereich in den Zeitbereich zur Bereitstellung des zeitabhängigen Kompensationssignals (k1(t), k4(t)) für den Antrieb (M1, M4) transformiert werden.

6. Verfahren nach Anspruch 1,
**dadurch gekennzeichnet,**
**dass** nach dem Schritt b) (120) das Spektrum (S) zur Zuordnung zumindest eines Teil-Spektrums (TS1, TS4) zu einer die Störung zumindest teilweise verursachenden Wickel-Einrichtung (1, 4) analysiert wird,
wobei das jeweilige einem der Wickel-Einrichtungen (1, 4) zugeordnete Teil-Spektrum (TS1, TS4) gefiltert wird, insbesondere in Abhängigkeit eines Ergebnisses des Analysierens gefiltert wird,
wobei das gefilterte Teil-Spektrum (TS1, TS4) von dem Frequenzbereich in den Zeitbereich zur Bereitstellung zumindest eines Teils des zeitabhängigen Kompensationssignals (k1(t), k4(t)) für den der verursachenden Wickel-Einrichtung (1, 4) zugeordneten Antrieb (M1, M4) transformiert wird.

7. Verfahren nach einem der Ansprüche 1 bis 6,
**dadurch gekennzeichnet,**
**dass** in dem Schritt a) die Störgröße (SG) im Zeitbereich während einer Messfahrt, insbesondere vor einem Regelbetrieb der Wickelmaschine (10), als zeitdiskretes Signal aufgenommen wird.

8. Verfahren nach einem der Ansprüche 1 bis 7,
**dadurch gekennzeichnet,**
**dass** in dem Schritt b) (120) die aufgenommene Störgröße (SG) von dem Zeitbereich mittels einer Frequenztransformation, insbesondere mittels einer Fourier-Transformation, in das Spektrum im Frequenzbereich transformiert wird.

9. Verfahren nach Anspruch 8,
**dadurch gekennzeichnet,**
**dass** als Frequenztransformation eine FFT (Fast Fourier Transformation) verwendet wird,
wobei in dem Schritt a) (110) die Störgröße (SG) zur Bereitstellung eines zeitdiskreten Signals mit einer ersten Abtastrate abgetastet wird,
wobei das abgetastete Signal mittels C-Splines interpoliert wird und das interpolierte Signal mit einer zweiten Abtastrate abgetastet wird, so dass die Anzahl der Abtaststellen einer Zweierpotenz entspricht,
wobei in dem Schritt b) (120) das mit der zweiten Abtastrate abgetastete Signal mittels der FFT in den Frequenzbereich transformiert wird.

10. Verfahren nach einem der Ansprüche 1 bis 9,
**dadurch gekennzeichnet,**
**dass** der Antrieb (M1, M4) mittels des positionsabhängigen Kompensationssignals (k1(α), k4(α)) vorgesteuert wird.

11. Verfahren nach einem der Ansprüche 1 bis 10,
**dadurch gekennzeichnet,**
**dass** das zeitabhängige Kompensationssignal (k1(t), k4(t)) in Abhängigkeit von einer jeweiligen Position (α) des Wickelkörpers (1) für einen Wickelzyklus aus N Umdrehungen des Wickelkörpers (1) in das positionsabhängige Kompensationssignal (k1(α), k4(α)) transformiert wird und in einer Tabelle einer Speichereinheit gespeichert wird.

12. Verfahren nach einem der Ansprüche 1 bis 11,
**dadurch gekennzeichnet,**
**dass** für einen jeden der Antriebe (M1, M4) der Wickel-Einrichtungen (1, 4) ein jeweiliges positionsabhängiges Kompensationssignal (k1(α), k4(α)) durch ein jeweiliges Durchführen der Schritte a) bis e) bereitgestellt wird.

13. Wickelmaschine (10) zum Wickeln eines Wickelgutes (D) aufweisend eine Anzahl von durch einen jeweiligen zugeordneten Antrieb (M1, M4) antreibbaren Wickel-Einrichtungen (1, 4), welche zumindest eine Versorgungsrolle (4) zum Bereitstellen des Wickelgutes (D) und einen Wickelkörper (1) umfassen, mit
einer Steuereinrichtung (SE), welche dazu eingerichtet ist, beim Aufwickeln des von der Versorgungsrolle (4) bereitgestellten Wickelgutes (D) über zumindest eine Umlenkrolle (2) auf den Wickelkörper (1) zumindest einen der Antriebe (M1, M4) in Abhängigkeit eines eine Störung zumindest teilweise kompensierenden positionsabhängigen Kompensationssignals (k1(α), k4(α)) einzustellen, **dadurch gekennzeichnet, dass** die Steuereinrichtung (SE) zum Bereitstellen des positionsabhängigen Kompensationssignals (k1(α), k4(α)) für den jeweiligen Antrieb (M1, M4) aufweist:
eine erste Einheit (11) zum Aufnehmen einer die Störung repräsentierenden Störgröße (SG) im Zeitbereich während eines Wickelvorgangs,
eine zweite Einheit (12) zum Transformieren der aufgenommenen Störgröße (SG) von dem Zeitbereich in ein Spektrum (S) im Frequenzbereich,
eine dritte Einheit (13) zum Filtern des Spektrums (S) mittels eines für die dem Antrieb (M1, M4) zugeordnete Wickel-Einrichtung (1, 4) spezifischen Filters (F1, F4),
eine vierte Einheit (14) zum Transformieren des gefilterten Spektrums (TS1, TS4) von dem Frequenzbereich in den Zeitbereich zur Bereitstellung eines zeitabhängigen Kompensationssignals (k1(t), k4(t)), und
eine fünfte Einheit (15) zum Transformieren des zeitabhängigen Kompensationssignals (k1(t), k4(t)) in das positionsabhängige Kompensationssignal (k1(α), k4(α)).

14. Computerprogrammprodukt, welches auf der Steuereinrichtung der Wickelmaschine des Anspruchs 13 die Durchführung des Verfahrens nach einem der Ansprüche 1 bis 12 veranlasst.

15. Steuereinrichtung (SE) für die Wickelmaschine des Anspruchs 13, welche dazu eingerichtet ist, mit Hilfe von den Antrieben (M1, M4) ein Verfahren nach einem der Ansprüche 1 bis 12 auszuführen.

## Claims

1. Method for winding a winding material (D) by means of a winding machine (10) having a number of winding devices (1, 4) which can be driven by a respectively assigned drive (M1, M4) and which comprise at least a supply roll (4) and a winding body (1), comprising the following steps:
providing (210) the winding material (D) from the supply roll (4), and
winding (220) the winding material (D) provided from the supply roll (4) over at least one deflection roll (2) onto the winding body (1), wherein at least one of the drives (M1, M4) is adjusted as a function of a position-dependent compensation signal (k1(α), k4(α)) at least partly compensating for a defect,
**characterized in that** the position-dependent compensation signal (k1(α),k4(α)) for the respective drive (M1, M4) is provided by the following steps:
a) acquiring (110) an interference variable (SG) representing the defect in the time domain during a winding operation,
b) transforming (120) the acquired interference variable (SG) from the time domain into a spectrum in the frequency domain,
c) filtering (130) the spectrum by means of a filter (F1, F4) specific to the winding device (1, 4) assigned to the drive (M1, M4),
d) transforming (140) the filtered spectrum (TS1, TS4) from the frequency domain into the time domain in order to provide a time-dependent compensation signal (k1(t), k4(t)), and
e) transforming (150) the time-dependent compensation signal (k1(t), k4(t)) into the position-dependent compensation signal (k1(α), k4(α)).

2. Method according to Claim 1,
**characterized in that**
the filter assigned to the drive (M1, M4) is configured as a function of parameters of the winding device (1, 4) assigned to the drive (M1, M4).

3. Method according to Claim 1,
**characterized in that**
during the filtering of the spectrum (S) in step c), frequencies of the spectrum (S) above a specific limiting frequency are masked out.

4. Method according to one of Claims 1 to 3,
**characterized in that**
during the filtering of the spectrum (S) in step c) (130), those partial spectra (TS1, TS4) of the spectrum (S) which depend on an operating frequency of the winding device (1, 4) assigned to the drive (M1, M4) are filtered out,
wherein, in step d) (140), the partial spectra (TS1, TS4) that are filtered out are transformed from the frequency domain into the time domain to provide the time-dependent compensation signal (k1(t), k4(t)) for the drive (M1, M4).

5. Method according to one of Claims 1 to 3,
**characterized in that**
during the filtering of the spectrum (S) in step c) (130), those partial spectra (TS1, TS4) of the spectrum (S) which correspond to an operating frequency of the winding device (1, 4) assigned to the drive (M1, M4) or one of its harmonics are filtered out, wherein, in step d) (140), the partial spectra (TS1, TS4) that are filtered out are transformed from the frequency domain into the time domain to provide the time-dependent compensation signal (k1(t), k4(t)) for the drive (M1, M4).

6. Method according to Claim 1,
**characterized in that**
following step b) (120), the spectrum (S) is analyzed to assign at least one partial spectrum (TS1, TS4) to a winding device (1, 4) at least partly causing the defect,
wherein the respective partial spectrum (TS1, TS4) assigned to one of the winding devices (1, 4) is filtered, in particular as a function of a result of the analysis,
wherein the filtered partial spectrum (TS1, TS4) is transformed from the frequency domain into the time domain to provide at least part of the time-dependent compensation signal (k1(t), k4(t)) for the drive (M1, M4) assigned to the causative winding device (1, 4).

7. Method according to one of Claims 1 to 6,
**characterized in that**
in step a), the interference variable (SG) is acquired as a time-discrete signal in the time domain during a measurement run, in particular before normal operation of the winding machine (10).

8. Method according to one of Claims 1 to 7,
**characterized in that**
in step b) (120), the acquired interference variable (SG) is transformed from the time domain into the spectrum in the frequency domain by means of a frequency transformation, in particular by means of a Fourier transformation.

9. Method according to Claim 8,
**characterized in that**
an FFT (Fast Fourier Transformation) is used as a frequency transformation,
wherein in step a) (110), the interference variable (SG) is sampled at a first sampling rate to provide a time-discrete signal,
wherein the sampled signal is interpolated by means of C-splines, and the interpolated signal is sampled at a second sampling rate, so that the number of sampling points corresponds to a power of two,
wherein in step b) (120), the signal sampled at the second sampling rate is transformed into the frequency domain by means of the FFT.

10. Method according to one of Claims 1 to 9,
**characterized in that**
feedforward control of the drive (M1, M4) is carried out by means of the position-dependent compensation signal (k1(α),k4(α)).

11. Method according to one of Claims 1 to 10,
**characterized in that**
the time-dependent compensation signal (k1(t), k4(t)) is transformed into the position-dependent compensation signal (k1(α),k4(α)) as a function of a respective position (α) of the winding body (1) for a winding cycle from N revolutions of the winding body (1), and is stored in a table of a memory unit.

12. Method according to one of Claims 1 to 11,
**characterized in that**
for each of the drives (M1, M4) of the winding devices (1, 4), a respective position-dependent compensation signal (k1(α), k4(α)) is provided by means of a respective execution of steps a) to e) .

13. Winding machine (10) for winding a winding material (D), having a number of winding devices (1, 4) which can be driven by a respectively assigned drive (M1, M4) and which comprise at least one supply roll (4) for providing the winding material (D) and a winding body (1), having
a control device (SE), which is configured to adjust at least one of the drives (M1, M4) as a function of a position-dependent compensation signal (k1(α),k4(α)) at least partly compensating for a defect when winding the winding material (D) provided from the supply roll (4) onto the winding body (1) over at least one deflection roll (2),
**characterized in that** to provide the position-dependent compensation signal (k1(α),k4(α)) for the respective drive (M1, M4), the control device (SE) has:
a first unit (11) for acquiring an interference variable (SG) representing the defect in the time domain during a winding operation,
a second unit (12) for transforming the acquired interference variable (SG) from the time domain into a spectrum (S) in the frequency domain,
a third unit (13) for filtering the spectrum (S) by means of a filter (F1, F4) that is specific to the winding device (1, 4) assigned to the drive (M1, M4),
a fourth unit (14) for transforming the filtered spectrum (TS1, TS4) from the frequency domain into the time domain to provide a time-dependent compensation signal (k1(t), k4(t)), and
a fifth unit (15) for transforming the time-dependent compensation signal (k1(t), k4(t)) into the position-dependent compensation signal (k1(α),k4(α)).

14. Computer program product which causes the execution of the method according to one of Claims 1 to 12 on the control device of the winding machine of Claim 13.

15. Control device (SE) for the winding machine of Claim 13, which is configured to execute a method according to one of Claims 1 to 12 with the aid of the drives (M, M4).

## Revendications

1. Procédé de bobinage d'un produit de bobinage (D) au moyen d'une bobineuse (10) présentant un certain nombre de dispositifs de bobinage (1, 4) pouvant être entraînés grâce à un entraînement (M1, M4) associé respectif et qui comprennent au moins un rouleau d'alimentation (4) et un corps de bobinage (1), comprenant les étapes consistant à :
fournir (210) le produit de bobinage (D) à partir du rouleau d'alimentation (4), et
bobiner (220) le produit de bobinage (D) fourni par le rouleau d'alimentation (4) sur le corps de bobinage (1) par l'intermédiaire d'au moins un rouleau de renvoi (2), dans lequel au moins un des entraînements (M1, M4) est ajusté en fonction d'un signal de compensation (k1(α), k4(α)) dépendant de la position et compensant au moins partiellement une perturbation, **caractérisé en ce que** le signal de compensation (k1(α), k4(α)) dépendant de la position est fourni pour l'entraînement (M1, M4) respectif grâce aux étapes ci-dessous consistant à :
a) réceptionner (110) une entrée perturbatrice (SG) représentative de la perturbation dans le domaine temporel pendant une opération de bobinage,
b) transformer (120) l'entrée perturbatrice (S4) réceptionnée en un spectre dans le domaine fréquentiel à partir du domaine temporel ;
c) filtrer (130) le spectre au moyen d'un filtre (F1, F2) spécifique au dispositif de bobinage (1, 4) associé à l'entraînement (M1, M4) ;
d) transformer (140) le spectre filtré (TS1, TS4) dans le domaine temporel à partir du domaine fréquentiel afin de fournir un signal de compensation dépendant du temps (k1(t), k4(t)) ; et
e) transformer (150) le signal de compensation dépendant du temps (b) en signal de compensation dépendant de la position (k1(α), k4(α).

2. Procédé selon la revendication 1,
**caractérisé en ce que**,
le filtre associé à l'entraînement (M1, M4) est paramétré en fonction de paramètres du dispositif de bobinage (1, 4) associé à l'entraînement (M1, M4).

3. Procédé selon la revendication 1,
**caractérisé en ce que**,
lors du filtrage du spectre (S) à l'étape c), les fréquences du spectre (S) situées au-dessus d'une fréquence limite déterminée sont masquées.

4. Procédé selon l'une quelconque des revendications 1 à 3,
**caractérisé en ce que**,
lors du filtrage du spectre (S) à l'étape c) (130), les sous-spectres (TS1, TS2) du spectre (S) qui dépendent d'une fréquence de fonctionnement du dispositif de bobinage (1, 4) associé à l'entraînement (M1, M4) sont filtrés,
dans lequel, à l'étape d) (140), les sous-spectres filtrés (TS1, TS4) sont transformés dans le domaine temporel à partir du domaine fréquentiel afin de fournir le signal de compensation dépendant du temps (k1(t), k4(t)) à l'entraînement (M1, M4).

5. Procédé selon l'une quelconque des revendications 1 à 3,
**caractérisé en ce que**,
lors du filtrage du spectre (S) à l'étape c) (130), les sous-spectres (TS1, TS2) du spectre (S) qui correspondent à une fréquence de fonctionnement, ou à l'un de ses harmoniques, du dispositif de bobinage (1, 4) associé à l'entraînement (M1, M4) sont filtrés,
dans lequel, à l'étape d) (140), les sous-spectres filtrés (TS1, TS4) sont transformés dans le domaine temporel à partir du domaine fréquentiel afin de fournir le signal de compensation dépendant du temps (k1(t), k4(t)) à l'entraînement (M1, M4).

6. Procédé selon la revendication 1,
**caractérisé en ce que**,
après l'étape b) (120), le spectre (S) est analysé afin d'associer au moins un sous-spectre (TS1, TS4) à un dispositif de bobinage (1, 4) provoquant au moins partiellement la perturbation,
dans lequel le sous-spectre (TS1, TS4) respectif associé à un des dispositifs de bobinage (1, 4) est filtré, en particulier en fonction d'un résultat de l'analyse,
dans lequel le sous-spectre filtré (TS1, TS4) est transformé dans le domaine temporel à partir du domaine fréquentiel afin de fournir au moins une partie du signal de compensation dépendant du temps (k1(t), k4(t)) à l'entraînement (M1, M4) associé au dispositif de bobinage (1, 4) perturbateur.

7. Procédé selon l'une quelconque des revendications 1 à 6,
**caractérisé en ce que**,
à l'étape a), l'entrée perturbatrice (SG) est réceptionnée dans le domaine temporel sous forme de signal temporellement discret pendant un cycle de mesure, en particulier avant une opération de réglage de la bobineuse (10).

8. Procédé selon l'une quelconque des revendications 1 à 7,
**caractérisé en ce que**,
à l'étape b) (120), l'entrée perturbatrice (SG) réceptionnée est transformée en spectre dans le domaine fréquentiel à partir du domaine temporel au moyen d'une transformation de fréquence, en particulier au moyen d'une transformation de Fourier.

9. Procédé selon la revendication 8,
**caractérisé en ce que**,
la transformation de fréquence utilisée est une FFT (transformation de Fourier rapide),
dans lequel, à l'étape a) (110), l'entrée perturbatrice (SG) est échantillonnée à une première fréquence d'échantillonnage afin de fournir un signal temporellement discret,
dans lequel le signal échantillonné est interpolé au moyen des splines cubiques et le signal interpolé est échantillonné à une seconde fréquence d'échantillonnage, de sorte que le nombre de points d'échantillonnage correspond à une puissance de deux,
dans lequel, à l'étape b) (120), le signal échantillonné à la seconde fréquence d'échantillonnage est transformé dans le domaine fréquentiel au moyen de la FFT.

10. Procédé selon l'une quelconque des revendications 1 à 9,
**caractérisé en ce que**,
l'entraînement (M1, M4) est piloté au moyen du signal de compensation dépendant de la position (k1(α), k4(α)).

11. Procédé selon l'une quelconque des revendications 1 à 10,
**caractérisé en ce que**,
le signal de compensation dépendant du temps (k1(t), k4(t)) est transformé en signal de compensation dépendant de la position (k1(α), k4(α)) pour un cycle de bobinage de N tours du corps de bobinage (1) en fonction d'une position respective (α) du corps de bobinage (1) et est stocké dans une table d'une unité de stockage.

12. Procédé selon l'une quelconque des revendications 1 à 11,
**caractérisé en ce que**,
un signal de compensation dépendant de la position (k1(α), k4(α)) respectif est fourni pour chacun des entraînements (M1, M4) des dispositifs de bobinage (1, 4) grâce à une mise en ouvre respective des étapes a) à e).

13. Bobineuse (10) permettant de bobiner un produit de bobinage (D), présentant un certain nombre de dispositifs de bobinage (1, 4) pouvant être entraînés grâce à un entraînement (M1, M4) associé respectif et qui comprennent au moins un rouleau d'alimentation (4), permettant de fournir le produit de bobinage (D), et un corps de bobinage (1), avec :
un dispositif de commande (SE) conçu pour, lors du bobinage du produit de bobinage (D) fourni par le rouleau d'alimentation (4) sur le corps de bobinage (1) par l'intermédiaire d'au moins un rouleau de renvoi (2), ajuster au moins un des entraînements (M1, M4) en fonction d'un signal de compensation dépendant de la position (k1(α), k4(α)) compensant au moins partiellement une perturbation, **caractérisé en ce que** le dispositif de commande (SE) permettant de fournir le signal de compensation dépendant de la position (k1(α), k4(α)) à l'entraînement respectif (M1, M4) présente :
une première unité (11) permettant de réceptionner une entrée perturbatrice (SG) représentant la perturbation dans le domaine temporel pendant une opération de bobinage,
une deuxième unité (12) permettant de transformer l'entrée perturbatrice (SG) réceptionnée en un spectre (S) dans le domaine fréquentiel à partir du domaine temporel,
une troisième unité (13) permettant de filtrer le spectre (S) au moyen d'un filtre (F1, F4) spécifique au dispositif de bobinage (1, 4) associé à l'entraînement (M1, M4),
une quatrième unité (14) permettant de transformer le spectre filtré (TS1, TS4) dans le domaine temporel à partir du domaine fréquentiel afin de fournir un signal de compensation dépendant du temps (k1(t), k4(t)), et
une cinquième unité (15) permettant de transformer le signal de compensation dépendant du temps (k1(t), k4(t)) en signal de compensation dépendant de la position (k1(α), k4(α)).

14. Produit-programme informatique permettant de mettre en oeuvre le procédé selon l'une quelconque des revendications 1 à 12 sur le dispositif de commande de la bobineuse de la revendication 13.

15. Dispositif de commande (SE) destiné à la bobineuse de la revendication 13, conçu afin de mettre en oeuvre un procédé selon l'une quelconque des revendications 1 à 12 à l'aide des entraînements (M1, M4).
